# EUROPÄISCHE PATENTSCHRIFT

(11) **EP 4 300 893 B1**
(45) Veröffentlichungstag und Bekanntmachung des Hinweises auf die Patenterteilung: **22.10.2025**
(21) Anmeldenummer: 22182566.4
(22) Anmeldetag: 01.07.2022
(51) Int. Cl.: H04L 12/12

(54) **VORRICHTUNG UND VERFAHREN ZUR KOPPLUNG EINES GERÄTENETZWERKES UND EINES KOMMUNIKATIONSNETZWERKES SOWIE AUTOMATISIERUNGSSYSTEM**
DEVICE AND METHOD FOR COUPLING A DEVICE NETWORK AND A COMMUNICATION NETWORK AND AUTOMATION SYSTEM
DISPOSITIF ET PROCÉDÉ DE COUPLAGE D'UN RÉSEAU D'APPAREILS ET D'UN RÉSEAU DE COMMUNICATION, AINSI QUE SYSTÈME D'AUTOMATISATION

(43) Veröffentlichungstag der Anmeldung: 03.01.2024
(73) Patentinhaber: Siemens Aktiengesellschaft, 80333 München (DE)
(72) Erfinder: Walter, Maximilian, 90408 Nürnberg (DE); Albrecht, Harald, 90475 Nürnberg (DE); Höme, Stephan, 91126 Schwabach (DE)
(74) Vertreter: Siemens Patent Attorneys

(56) Entgegenhaltungen:
- EP-A1- 3 051 779
- WO-A1-2019/141349
- DE-A1- 102013 102 998

## Beschreibung

Die vorliegende Erfindung betrifft eine Vorrichtung und ein Verfahren zur Kopplung eines Gerätenetzwerkes und eines Kommunikationsnetzwerkes. Insbesondere betrifft die vorliegende Erfindung die Kopplung eines Gerätenetzwerkes, welches mindestens ein Automatisierungsgerät umfasst, mit einem Kommunikationsnetzwerk, welches eine Steuervorrichtung für das mindestens eine Automatisierungsgerätgerät umfasst. Ferner betrifft die vorliegende Erfindung ein Automatisierungssystem, insbesondere ein Automatisierungssystem mit mehreren Gruppen von Automatisierungsgeräten.

Für industrielle Anwendungen werden vielmals Automatisierungssysteme eingesetzt. Ein Beispiel für solche Automatisierungssysteme sind speicherprogrammierbare Steuerungen (SPS, engl. programmable logic controller, PLC). Hierbei können mehrere Automatisierungsgeräte über eine Datenverbindung mit einer Steuervorrichtung gekoppelt werden. Die Steuervorrichtung kann Messgrößen, Sensorwerte o. ä. von den Automatisierungsgeräten empfangen sowie Steuerbefehle an die Automatisierungsgeräte senden. Hierbei ist es von großer Bedeutung, dass die Steuervorrichtung die empfangenen Daten einem korrekten Automatisierungsgerät zuordnen kann und das die Steuerbefehle von der Steuervorrichtung von dem beabsichtigten Automatisierungsgerät ausgeführt werden. Daher kommt der Adressierung der einzelnen Komponenten sowie auch der Überprüfung, ob die empfangenen Daten auch tatsächlich von der richtigen Komponente empfangen worden sind, eine große Bedeutung zu.

Sicherheits-Kommunikationsprotokolle, insbesondere sicher Kommunikationsprotokolls nach IEC 61784-3, wie beispielsweise PROFIsafe, verwenden hierbei neben einer Netzwerk-Adresse zur Adressierung einer Komponente zusätzlich sogenannte "Codenames" (CN), um Adressierungsfehler zu erkennen. Diese Codenames sind in beiden Endpunkten einer Verbindung gespeichert. Bei der Installation und Konfiguration eines Automatisierungssystems muss dabei jedoch darauf geachtet werden, dass für jede Verbindung ein unterschiedlicher Codename verwendet wird. Dies ist jedoch mit großem organisatorischen Aufwand verbunden und wird gegenwärtig auch nur eingeschränkt unterstützt. So ist beispielsweise aufgrund der Länge von 32 Bit für die Codenames der verfügbare Adressraum sehr eingeschränkt.

Die EP 3 051 779 A1 offenbart ein Verfahren diesen Adressraum zu vergrößern.

Darüberhinausgehende Erweiterungen zur Sicherstellung einer korrekten Adressierung sind gegenwärtig jedoch nur in einer geringen Anzahl von Endgeräten implementiert und stehen daher ebenfalls nur eingeschränkt zur Verfügung.

Mit fortschreitender Entwicklung werden darüber hinaus in modernen Automatisierungsinfrastrukturen zunehmend Steuerungsaufgaben in einer zentralen Steuerungshardware zusammengefasst. So können beispielsweise die Prozesse mehrerer Steuervorrichtungen für Automatisierungssysteme auf einer gemeinsamen zentralen Hardware ausgeführt werden. Dies verspricht beispielsweise eine einheitliche Software-Umgebung für Betrieb und Wartung bzw. Software-Aktualisierung.

Werden jedoch Steuerungsprozesse für mehrere Automatisierungssysteme auf einer zentralen Hardware ausgeführt, so steigt dabei auch die Herausforderung für eine korrekte Adressierung der einzelnen Automatisierungsgeräte sowie für die Überprüfung einer korrekten Adressierung.

Vor diesem Hintergrund ist es wünschenswert, in Automatisierungssystemen mit konventionellen, bestehenden und gegenwärtig verfügbaren Automatisierungskomponenten auch bei einer Steuerung durch eine zentrale Hardwareeinheit mit mehreren Steuerungsprozessen eine sichere und zuverlässige Adressierung der Automatisierungskomponenten gewährleisten zu können. Die vorliegende Erfindung schafft eine Vorrichtung und ein Verfahren zur Kopplung eines Gerätenetzwerkes mit einem Kommunikationsnetzwerk sowie ein Automatisierungssystem mit den Merkmalen der unabhängigen Patentansprüche. Weitere Verlauf der Ausführungsformen sind Gegenstand der abhängigen Patentansprüche.

Gemäß einem ersten Aspekt ist eine Vorrichtung zur Kopplung eines Gerätenetzwerks mit einem Kommunikationsnetzwerk vorgesehen. Das Gerätenetzwerkes umfasst hierbei mindestens ein Automatisierungsgerät. Das Kommunikationsnetzwerks umfasst eine Steuervorrichtung für das mindestens eine Automatisierungsgerät. Insbesondere können in der Steuervorrichtung mehrere Steuerprozesse für Automatisierungsgeräte in unterschiedlichen Gerätenetzwerken vorgesehen sein. Die Vorrichtung zur Kopplung des Gerätenetzwerkes mit dem Kommunikationsnetzwerk umfasst eine erste Schnittstelle, eine zweite Schnittstelle und eine Verarbeitungseinrichtung. Die erste Schnittstelle ist dazu ausgelegt, mit dem Gerätenetzwerk gekoppelt zu werden. Die zweite Schnittstelle ist dazu ausgelegt, mit dem Kommunikationsnetzwerk gekoppelt zu werden. Die Verarbeitungseinrichtung ist dazu ausgelegt, ein Datentelegrammm von einem Automatisierungsgerät in dem Gerätenetzwerk mit einer gerätespezifischen Kennung zu signieren und das signierte Datentelegram über das das Kommunikationsnetzwerk an die Steuervorrichtung zu senden. Ferner ist die Verarbeitungseinrichtung dazu ausgelegt, ein signiertes Datentelegramm von der Steuervorrichtung unter Verwendung einer gerätespezifischen Kennung zu überprüfen. Die Verarbeitungseinrichtung ist ebenfalls dazu ausgelegt, die Signatur des empfangenen signierten Datentelegramms zu entfernen und das Datentelegramm ohne die Signatur an ein Automatisierungsgerät in dem Gerätenetzwerk zu senden. Die gerätespezifische Kennung umfasst hierbei eine vorbestimmte Kennung eines Quellgeräts oder Zielgeräts in dem Gerätenetzwerk.

Gemäß einem weiteren Aspekt ist ein erstes Automatisierungssystem vorgesehen. Das erste Automatisierungssystem umfasst mehreren Gruppen von Automatisierungsgeräten, eine Steuervorrichtung und mehrere erfindungsgemäße Vorrichtungen zur Kopplung eines Gerätenetzwerkes mit einem Kommunikationsnetzwerk. Hierbei sind die Automatisierungsgeräte einer Gruppe von Automatisierungsgeräten jeweils mittels eines separaten Gerätenetzwerks miteinander verbunden. Die Steuervorrichtung ist dazu ausgelegt, mehrere Steuerungsprozesse für die Automatisierungsgeräte auf einer gemeinsamen Hardware auszuführen. Hierbei ist jeweils ein Steuerungsprozess für die Automatisierungsgeräte einer Gruppe von Automatisierungsgeräten vorgesehen. Jeweils eine Vorrichtung zur Kopplung eines Gerätenetzwerks mit einem Kommunikationsnetzwerk koppelt ein Gerätenetzwerk mit einer Gruppe von Automatisierungsgeräten mit dem Kommunikationsnetzwerk. Die Steuervorrichtung ist dabei mit den mehreren Vorrichtungen zur Kopplung eines Gerätenetzwerks mit einem Kommunikationsnetzwerk über ein gemeinsames Kommunikationsnetzwerk verbunden.

Gemäß noch einem weiteren Aspekt ist ein zweites Automatisierungssystem vorgesehen. Das zweite Automatisierungssystem umfasst mehreren Gruppen von Automatisierungsgeräten, eine Steuervorrichtung und mehrere Vorrichtungen zur Kopplung eines Gerätenetzwerkes mit einer Steuervorrichtung. Die Automatisierungsgeräte einer Gruppe von Automatisierungsgeräten sind hierbei jeweils mittels eines separaten Gerätenetzwerks miteinander verbunden. Die Steuervorrichtung ist dazu ausgelegt, mehrere Steuerungsprozesse für Automatisierungsgeräte auf einer gemeinsamen Hardware auszuführen. Hierbei ist jeweils ein Steuerungsprozess für die Automatisierungsgeräte einer Gruppe von Automatisierungsgeräten vorgesehen. Ferner ist in der Steuervorrichtung für jeden Steuerungsprozess eine Verarbeitungsinstanz vorgesehen. Dieser Verarbeitungsinstanzen sind jeweils dazu ausgelegt, ein Datentelegram von einem Automatisierungsgerät mit einer gerätespezifischen Kennung zu signieren und das signierte Datentelegramm an den korrespondierenden Steuerungsprozess weiterzuleiten. Ferner sind die Verarbeitungsinstanzen jeweils dazu ausgelegt, ein signiertes Datentelegramm von einem Steuerungsprozess unter Verwendung einer gerätespezifischen Kennung zu überprüfen, die Signatur des signierten Datentelegramms zu entfernen und das Datentelegramm ohne die Signatur auszugeben. Die Vorrichtungen zur Kopplung eines Gerätenetzwerks mit einer Steuervorrichtung sind jeweils dazu ausgelegt, eine gesicherte Verbindung mit einer Verarbeitungsinstanz der Steuervorrichtung über ein Kommunikationsnetzwerk aufzubauen und Datentelegramme zwischen dem jeweiligen Gerätenetzwerk und der korrespondierenden Verarbeitungsinstanz der Steuervorrichtung über die gesicherte Verbindung auszutauschen.

Als Automatisierungsgerät der werden in diesem Zusammenhang alle Arten von Automatisierungskomponenten verstanden, welche Steuerbefehle von einer Steuervorrichtung empfangen und daraufhin vorbestimmte Operationen ausführen. Ferner können die Automatisierungsgerät auch Daten, wie beispielsweise Messwerte, Sensordaten, einen aktuellen Zustand o. ä. an die Steuervorrichtung übertragen. Beispielsweise kann es sich bei den Automatisierungsgeräten um einen auch Roboterarm o. ä. handeln. Darüber hinaus sind selbstverständlich auch beliebige andere Arten von Automatisierungsgeräten möglich.

In Automatisierungssystemen, in welchen mehrere Automatisierungsgeräte von einer gemeinsamen Steuerung adressiert werden, kommt der korrekten Adressierung sowie auch aus Sicherheitsgründen einer verlässlichen Verifizierung der Adressierung ein empfangenes Datentelegramm, eine große Bedeutung zu. Insbesondere in hyperkonvergenten Infrastrukturen, in denen mehrere Steuerungsprozesse für unterschiedliche Gruppen von Automatisierungsgeräten in einer gemeinsamen zentralen Hardware ausgeführt werden, so stellt dabei die korrekte Adressierung und auch die Überprüfung dieser Adressierung von empfangenen Datenpaketen eine große Herausforderung dar. Konventionelle Konzepte können nur sehr schwer bis gar nicht auf Automatisierungssystemen mit einer zentralen Hardware, die mehrere Steuerungsprozesse parallel ausführt, angewendet werden. Darüber hinaus handelt es sich bei der Implementierung mehrerer Steuerungsprozesse in einer gemeinsamen Hardware um ein gegenwärtig noch relativ neues Konzept. Daher existieren gegenwärtig auch relativ wenige Hardwarekomponenten, in welchen neuartige Adressierung- und Überprüfungskonzepte implementiert sind.

Es ist daher eine Idee der vorliegenden Erfindung, dieser Erkenntnis Rechnung zu tragen und ein Konzept für eine zuverlässige Adressierung sowie Überprüfung der Adressierung bereitzustellen, welches auch auf bereits bestehende Hardware von Automatisierungsgeräten einfach angewendet werden kann.

In neuartigen Automatisierungssysteme, wie zum Beispiel einer Erweiterung von PROFIsafe, ist neben der konventionellen Adressierung und einem zusätzlichen Datenelement, dem sogenannten "Codename" CN ein weiteres Merkmal vorgesehen, das unter anderem auch als "BaseID" bezeichnet wird. Hierbei wird eine zusätzliche gerätespezifische Kennung, beispielsweise eine 64-Bit-Zahl genutzt, um einen Teil eines Datentelegramms gerätespezifisch zu signieren. Aufgrund des großen Wertebereichs einer solchen 64-Bit-Zahl kann eine Mehrfachvergabe dieser Kennung nahezu ausgeschlossen werden. Die Kennung kann hierbei sowohl in dem Steuerungssystem bzw. Steuerungsprozess, als auch in dem zu adressieren Gerät selbst hinterlegt werden. Ein Sender, entweder das Steuerungssystem oder die Automatisierungskomponente, signiert dabei mit dieser Kennung ein Datentelegramm oder zumindest ein Datenelement eines solchen Datentelegramms. Da diese Kennung zur Signatur gerätespezifisch ist, d. h. für jede Automatisierungskomponente individuell gewählt wird, kann der Empfänger daraufhin anhand dieser Signatur überprüfen, ob die Adresse der gerätespezifischen Signatur korrespondiert und somit dem richtigen Automatisierungsgerät zugeordnet ist.

Da es sich hierbei jedoch um ein relativ neues Konzept handelt, ist dieses Verfahren noch nicht in allen Automatisierungskomponenten implementiert und kann daher gerade bei hyper-konvergenten Infrastrukturen, d. h. in Automatisierungssystemen, bei welchen eine zentrale Steuervorrichtung mehrere Steuerprozesse für mehrere unterschiedliche Gruppen von Automatisierungsgeräten ausführt, nicht oder nur sehr eingeschränkt umgesetzt werden.

Daher ist es erfindungsgemäß vorgesehen, den Datenaustausch auf Basis des zuvor beschriebenen Konzepts mit einer gerätespezifischen Signatur der Adressierung zwischen der zentralen Steuervorrichtung und einer Koppelvorrichtung zwischen einem Kommunikationsnetzwerk und einem Gerätenetzwerk zu implementieren. Für die weitere Datenstrecke zwischen der Koppelvorrichtung und den Automatisierungsgeräten erfolgt dabei die Übertragung der Datentelegramme und die Verifikation der Adressierung auf konventionelle Weise, wie sie auch in bisherigen Anlagenkomponenten implementiert ist. Die Koppelvorrichtung dient hier somit als eine Art Gateway, welches die Datentelegramme zwischen den beiden Netzwerken anpasst und gleichzeitig eine erweiterte Signatur der Datentelegramme ergänzen kann bzw. die erweiterte Signatur entfernen kann, um die Datentelegramme für konventionelle Automatisierungsgeräte verfügbar zu machen.

Da es sich bei den Gerätenetzwerken jeweils um kleinere Netzwerke mit einer begrenzten Gruppe von Automatisierungsgeräten handelt, ist er hierbei eine Überprüfung der korrekten Adressierung auf Grundlage von konventionellen Verfahren wie beispielsweise Codenames oder ähnlichem ausreichend. Für den Bereich des Kommunikationsnetzwerkes, in welchem eine größere Anzahl von Datentelegramme aus mehreren Gerätenetzwerken zu der zentralen Steuerungskomponente übertragen werden, kann dagegen die Adressierung auf Grundlage der zusätzlichen gerätespezifischen Signatur erhöht werden.

Gemäß einer Ausführungsform umfasst die Vorrichtung zur Kopplung des Gerätenetzwerkes mit einem Kommunikationsnetzwerk eine Speichereinrichtung. Diese Speichereinrichtung ist dazu ausgelegt, vorbestimmten gerätespezifischen Kennungen für Automatisierungsgeräte in dem Gerätenetzwerk zu speichern und bereitzustellen. Somit kann die Vorrichtung zur Kopplung des Gerätenetzwerkes mit dem Kommunikationsnetzwerk für die einzelnen Automatisierungsgeräte in dem Gerätenetzwerk jeweils die korrespondierende gerätespezifische Kennung aus der Speichereinrichtung auslesen, um ein Datentelegramm zu signieren oder ein signiertes Datentelegramm zu überprüfen. Die Speichereinrichtung kann beispielsweise bei einer Konfiguration bzw. Inbetriebnahme eines Automatisierungssystems mit den jeweiligen gerätespezifischen Kennungen beschrieben werden. Darüber hinaus ist beispielsweise auch ein automatisches Programmieren der Speichereinrichtung durch die Steuervorrichtung möglich. So kann die Steuervorrichtung beispielsweise spezielle Datentelegramme oder Datenpakete an die Vorrichtung zur Kopplung des Gerätenetzwerkes mit dem Kommunikationsnetzwerk senden, um der Vorrichtung die entsprechenden gerätespezifischen Kennungen mitzuteilen. Darüber hinaus sind selbstverständlich auch beliebige andere Konzepte zur Speicherung der gerätespezifischen Kennungen in der Speichereinrichtung möglich.

Gemäß einer Ausführungsform umfasst das Signieren eines Datentelegramms von dem Gerätenetzwerk und das Entfernen der Signatur eines Datentelegramms aus dem Kommunikationsnetzwerk eine XOR-Operation zwischen einem vorbestimmten Datenfeld und der gerätespezifischen Kennung. Durch eine solche Entweder-oder-Operation (XOR) kann bei zweimaliger Anwendung dieser Operation der ursprüngliche Ausgangswert erhalten werden. Wird somit zunächst ein Datenelement mit einer solchen XOR-Operation der gerätespezifischen Kennung signiert, so kann durch erneutes Anwenden dieser Operation mit derselben gerätespezifischen Kennung der ursprüngliche Ausgangswert gewonnen werden. Somit steht ein besonders einfaches und sehr schnell zu implementierendes Verfahren zum Signieren bzw. zum Überprüfen der Signatur zur Verfügung.

Gemäß einer Ausführungsform ist die Verarbeitungseinrichtung dazu ausgelegt, bereits signierte Datentelegramme aus dem Gerätenetzwerk unverändert über das Kommunikationsnetzwerk zu der Steuervorrichtung weiterzuleiten und signierte Datentelegramme unverändert an ein Automatisierungsgerät in dem Gerätenetzwerk weiterzuleiten, falls das entsprechenden Automatisierungsgerät dazu ausgelegt ist, signierte Datentelegramme zu verarbeiten. Mit anderen Worten, die Verarbeitungseinrichtung leidet bereits signiertes Datentelegramme unverändert zwischen dem Automatisierungsgerät und der Steuervorrichtung weiter, falls das entsprechende Automatisierungsgerät selbst in der Lage ist signierte Datentelegramme zu verarbeiten. Die Verarbeitungseinrichtung kann hierbei auf beliebige Weise feststellen, dass das jeweilige Automatisierungsgerät zu einer eigenständigen Signatur der Datentelegramme in der Lage ist. Beispielsweise können Informationen über derartige Automatisierungsgerät in einem Speicher hinterlegt werden.

Gemäß einer Ausführungsform ist die Verarbeitungseinrichtung dazu ausgelegt, ein signiertes Datentelegramm zu verschlüsseln, bevor es über das Kommunikationsnetzwerk zu der Steuervorrichtung gesendet wird. Analog kann die Verarbeitungseinrichtung ebenfalls dazu ausgelegt sein, verschlüsselten Datentelegramm von der Steuervorrichtung zu entschlüsseln. Mit anderen Worten, die Kommunikation zwischen der Vorrichtung zur Kopplung des Gerätenetzwerkes mit dem Kommunikationsnetzwerk einerseits und der Steuervorrichtung andererseits kann über eine gesicherte, verschlüsselte Kommunikationsverbindung erfolgen. Diese Weise kann die Sicherheit für eine korrekte Adressierung zusätzlich erhöht werden, da im Falle eines Adressierungsfehlers der Empfänger nicht in der Lage wäre, die verschlüsselten Daten korrekt zu entschlüsseln.

Gemäß einer Ausführungsform umfassen die Datentelegramme, welche zwischen den Automatisierungsgeräten und der Steuervorrichtung ausgetauscht werden Telegramme eines Kommunikationsprotokolls nach IEC 61784-3, wie z.B. PROFIsafe. Darüber kann das erfindungsgemäße Konzept selbstverständlich auch auf beliebige andere Automatisierungssysteme und entsprechende Datentelegramme angewendet werden.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann auch Einzelaspekte als Verbesserungen oder Ergänzungen zu den jeweiligen Grundformen der Erfindung hinzufügen.

Weitere Merkmale und Vorteile der Erfindung werden nachfolgend anhand der Figuren erläutert. Dabei zeigen:
- FIG 1: eine schematische Darstellung eines Automatisierungssystems gemäß einer Ausführungsform;
- FIG 2: eine schematische eines Automatisierungsgeräts mit einem externen Datenelement zum Bereitstellen einer gerätespezifischen Kennung;
- FIG 3: eine schematische Darstellung einer Vorrichtung zur Kopplung eines Gerätenetzwerks mit einem Kommunikationsnetzwerk gemäß einer Ausführungsform;
- FIG 4: eine schematische Darstellung zur Veranschaulichung der Anpassung von Datentelegrammen zwischen einem Gerätenetzwerk und einem Kommunikationsnetzwerk;
- FIG 5: eine schematische Darstellung eines Automatisierungssystems gemäß einer weiteren Ausführungsform.; und
- FIG 6: eine schematische Darstellung eines Automatisierungssystems gemäß noch einer weiteren Ausführungsform.

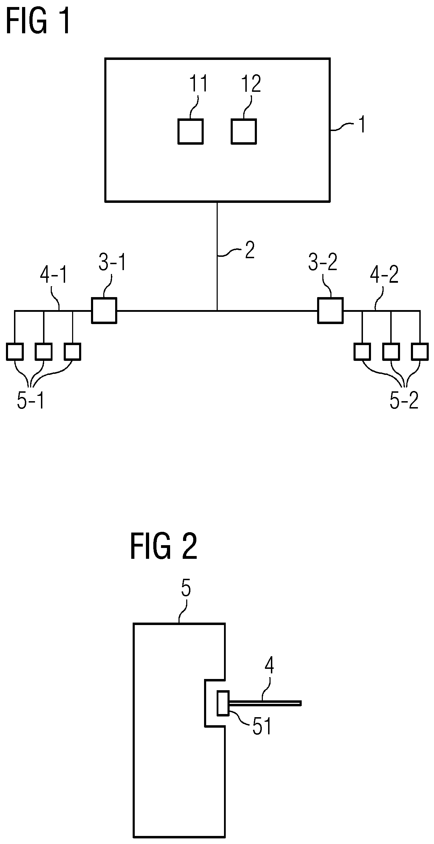

Figur 1 zeigt eine schematische Darstellung eines Prinzipschaltbilds eines Automatisierungssystems gemäß einer Ausführungsform. Das Automatisierungssystem umfasst eine Steuervorrichtung 1. Darüber hinaus sind in dem Automatisierungssystem mehrere Automatisierungsgeräte 5-1, 5-2 vorgesehen. Die Automatisierungsgerät der 5-1 und 5-2 sind dabei jeweils einer von mehreren Gruppen von Automatisierungsgeräten zugeordnet. In dem hier dargestellten Beispiel sind die Automatisierungsgerät 5-1 der ersten Gruppe von Automatisierungsgeräten zugeordnet und die Automatisierung der 5-2 der zweiten Gruppe von Automatisierungsgeräten. Es versteht sich hierbei, dass die dargestellten zwei Gruppen von Automatisierungsgeräten 5-1 und 5-2 nur als Beispiel zu verstehen sind. Darüber hinaus grundsätzlich jede beliebige Anzahl von Gruppen von Automatisierungsgeräten möglich. Auch kann in jeder Gruppe von Automatisierungsgeräten eine beliebige Anzahl von Automatisierungsgeräten vorgesehen sein.

Für jede Gruppe von Automatisierungsgeräten 5-1, 5-2 ist in der Steuervorrichtung 1 ein separater Steuerungsprozess 11, 12 vorgesehen. Jeder dieser Steuerungsprozesse 11, 12 kann hierbei Steuerungsbefehle für eine Gruppe von Automatisierungsgeräten 5-1 bzw. 5-2 generieren, sowie Daten von den Automatisierungsgeräten 5-1 bzw. 5-2 empfangen, auf deren Grundlage die Steuerungsbefehle generiert werden können.

Für den Datenaustausch zwischen den Automatisierungsgeräten 5-1, 5-2 und der Steuervorrichtung 1 ist die Steuervorrichtung 1 an ein Kommunikationsnetzwerk 2 angeschlossen. Bei dem Kommunikationsnetzwerk 2 können sich um ein beliebiges Kommunikationsnetzwerk einer IT- Infrastruktur handeln. Beispielsweise kann es sich hierbei um ein Ethernet-Netzwerk o. ä. handeln darüber hinaus sind sie vollständig auch beliebige andere geeignete Kommunikationsnetzwerk möglich.

Die Automatisierungsgeräten 5-1 einer ersten Gruppe von Automatisierungsgeräten ist an ein erstes Gerätenetzwerkes 4-1 angeschlossen, und die Automatisierungsgeräten 5-2 einer zweiten Gruppe von Automatisierungsgeräten ist an ein zweites Gerätenetzwerkes 4-2 angeschlossen. Bei den Gerätenetzwerken 4-1 bzw. 4-2 kann es sich hierbei um Netzwerke handeln, welche dem jeweiligen Kommunikationsstandard der Automatisierungsgeräten 5-1 bzw. 5-2 entsprechen. Beispielsweise können die Gerätenetzwerkes 4-1 und 4-2 als PROFIbus-Netzwerk ausgeführt sein. Es versteht sich dabei, dass sie nach Wahl der Automatisierungsgeräten 5-1 5-2 hierbei ein entsprechendes geeignetes Netzwerk vorgesehen sein kann.

Die Gerätenetzwerkes 4-1 und 4-2 sind jeweils über eine Vorrichtung 3-1 bzw. 3-2 zur Kopplung eines Gerätenetzwerkes mit einem Kommunikationsnetzwerk mit dem Kommunikationsnetzwerk 3 verbunden.

Die Vorrichtungen 3-1, 3-2 zur Kopplung der Gerätenetzwerke 4-1, 4-2 mit dem Kommunikationsnetzwerk 2 können hierbei als eine Art Gateway angesehen werden. Dabei werden Datentelegramme von der Steuervorrichtung 1 über die jeweilige Vorrichtung 3-1 bzw. 3-2 an eines der Automatisierungsgerät 5-1, 5-2 gesendet. Umgekehrt können auch Datentelegramme von den Automatisierungsgeräten 5-1, 5-2 über die entsprechenden Vorrichtungen 3-1 bzw. 3-2 zu der Steuervorrichtung 1 gesendet werden. Hierbei ist es von entscheidender Bedeutung, dass die von der Steuervorrichtung 1 ausgesendeten Datentelegramme auch tatsächlich von dem korrekten Automatisierungsgerät 5-1, 5-2 empfangen werden. Ebenso ist es wichtig, dass die von den Automatisierungsgeräten 5-1 bzw. 5-2 ausgesendeten Datentelegramme durch die Steuerungsprozesse 11, 12 in der Steuervorrichtung 1 dem korrekten Automatisierungsgerät 5-1, 5-2 zugeordnet werden. Hierzu muss eine korrekte Adressierung sichergestellt und möglichst überprüft werden.

Beispielsweise ist in Automatisierungssystem gemäß der PROFIsafe-Norm ein sogenannter Codename vorgesehen, um eine korrekte Adressierung sicherzustellen. Aufgrund des begrenzten Wertebereichs dieser Codenames und dem großen Administrationsaufwand wird dieses Merkmal jedoch hier nicht weiter beleuchtet.

Darüber hinaus sieht eine Erweiterung von PROFIsafe beispielsweise ein als "BaseID" bezeichnetes zusätzliches Merkmal vor. Hierbei handelt es sich um eine individuelle gerätespezifische Kennung die einerseits in den Automatisierungsgeräten 5-1 bzw. 5-2 und andererseits in den korrespondierenden Steuerungsprozesse 11, 12 der Steuervorrichtung 1 hinterlegt sein kann. Beispielsweise kann diese gerätespezifische Kennung in einem permanenten Speicher der Automatisierungsgerät 5-1, 5-2 abgespeichert sein. Gegebenenfalls ist es auch möglich, diese gerätespezifische Kennung auf einem Speicherelement eines separaten Bauteils abzuspeichern. Somit kann beim Austausch eines Automatisierungsgerät 5-1, 5-2 dieses separate Bauteil die neu installierte Komponente eingesteckt werden, um somit die bisherige gerätespezifische Kennung in dem neuen Gerät nutzen zu können. Auf diese Weise kann im Servicefall die gerätespezifische Kennung sehr einfach übertragen werden. Eine Neuprogrammierung des Automatisierungsgeräts kann somit entfallen.

Figur 2 zeigt exemplarisch eine schematische Darstellung eines Automatisierungsgeräts 5 mit einem separaten Bauelement 51, in welchem die gerätespezifische Kennung gespeichert sein kann. Beispielsweise kann dieses separate Bauelement 51 im Bereich einer Steckverbindung zum Anschluss des Automatisierungsgeräts 5 an ein Gerätenetzwerkes 4 vorgesehen sein. Somit kann das separate Bauelement 51 beim Abziehen der Steckverbindung an der Verbindungskomponente des Gerätenetzwerkes 4 verbleiben und gemeinsam mit dieser Verbindungskomponente des Gerätenetzwerkes 4 in ein neu zu installieren des Automatisierungsgerät 5 eingesteckt werden.

Da jedoch gegenwärtig noch nicht in allen Automatisierungsgeräten 5-1, 5-2 die Nutzung derartiger gerätespezifischer Kennungen implementiert ist und auch auf absehbare Zeit noch zahlreiche Automatisierungsgeräte 5-1, 5-2 ohne eine solche Implementierung eingesetzt werden, kann das Konzept solcher gerätespezifischen Kennungen in die bereits zuvor beschriebenen Vorrichtungen 3-1, 3-2 zur Kopplung eines Gerätenetzwerkes 4-1, 4-2 mit einem Kommunikationsnetzwerk 2 ausgelagert werden.

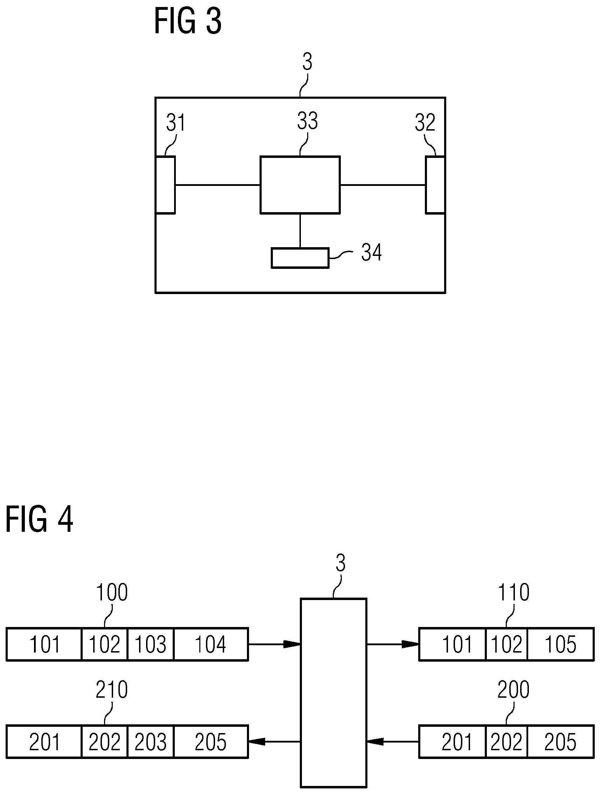

Figur 3 zeigt eine schematische Darstellung einer Vorrichtung 3 zur Kopplung eines Gerätenetzwerkes 4 mit einem Kommunikationsnetzwerk 2, wie sie beispielsweise in dem zuvor beschriebenen Automatisierungssystem eingesetzt werden kann. Die Vorrichtung 3 kann hierbei eine erste Schnittstelle 31 aufweisen, mit welcher die Vorrichtung 3 mit einem Gerätenetzwerkes 4 verbunden werden kann. Analog kann eine zweite Schnittstelle 32 vorgesehen sein, über welche Vorrichtung 3 mit dem Kommunikationsnetzwerk 2 verbunden werden kann. Zwischen den beiden Schnittstellen 31, 32 ist eine Verarbeitungseinrichtung 33 vorgesehen. Nachfolgend wird die Funktionsweise dieser Verarbeitungseinrichtung 33 näher erläutert.

Empfängt die Vorrichtung 3 von einem Automatisierungsgerät 5-1, 5-2 ein Datentelegramm, wobei in dem entsprechenden Automatisierungsgerät 5-1, 5-2 bereits das Konzept einer gerätespezifischen Kennung implementiert ist, so leitet die Vorrichtung 3 ein solches Datentelegramm über das Kommunikationsnetzwerk 2 an die Steuervorrichtung 1 weiter. Analog kann die Vorrichtung 3 auch Datentelegramme von der Steuervorrichtung 1 an ein Automatisierungsgerät 5-1, 5-2 weiterleiten, wenn in diesem Automatisierungsgerät 5-1, 5-2 das Konzept der gerätespezifischen Kennung bereits implementiert ist.

Empfängt die Vorrichtung 3 dagegen von der Steuervorrichtung 1 einen Datentelegramm für ein Automatisierungsgerät 5-1, 5-2, in welchem die Funktion der gerätespezifischen Kennungen nicht implementiert ist, so kann die Vorrichtung 3 ein solches Datentelegramm zunächst unter Verwendung einer für ein solches Automatisierungsgerät 5-1, 5-2 hinterlegten gerätespezifischen Kennung verifizieren und das Datentelegramme derart anpassen, dass es von dem adressierten Automatisierungsgerät 5-1, 5-2 verarbeitet werden kann.

Entsprechend kann die Vorrichtung 3 auch ein Datentelegramm von einem Automatisierungsgerät 5-1, 5-2 empfangen und ein solches Datentelegramm unter Verwendung einer für dieses Automatisierungsgerät 5-1, 5-2 hinterlegten gerätespezifischen Kennung anpassen und daraufhin über das Kommunikationsnetzwerk 2 an die Steuervorrichtung 1 senden.

Figur 4 zeigt eine schematische Darstellung zur Veranschaulichung der Verarbeitung von Datentelegrammen in einer Vorrichtung 3 für den Fall, dass in dem entsprechenden dieses Automatisierungsgerät 5-1, 5-2 das Konzept der gerätespezifischen Kennungen nicht implementiert ist.

In der oberen Zeile der ist der Datenaustausch von der Steuervorrichtung 1 zu einem Automatisierungsgerät 5-1, 5-2 dargestellt. In der unteren Zeile ist der Datenaustausch von einem Automatisierungsgerät 5-1, 5-2 zu der Steuervorrichtung 1 dargestellt.

Ein Datentelegramm 100 von der Steuervorrichtung 1 kann beispielsweise neben den Nutzdaten 101 ein Status/Kontrollbyte 102 sowie eine gemäß der gerätespezifischen Kennung für das adressierte Automatisierungsgerät 5-1, 5-2 modifizierte Datensequenz 103 umfassen. Darüber hinaus kann in dem Datentelegramm 100 eine Prüfsumme bzw. ein Hashwert 104 enthalten sein.

Die Verarbeitungsvorrichtung 33 überprüft beim Empfang eines solchen Datentelegramms 100 zunächst die Integrität dieses Datentelegramms unter Verwendung der Prüfsumme 104. Ist diese Prüfsumme nicht korrekt, so kann das entsprechende Datentelegramm verworfen werden. Ist die Prüfsumme korrekt, so wird das Datentelegramm unter Verwendung der gerätespezifischen Kennung für das adressierte Automatisierungsgerät 5-1, 5-2 modifiziert. Hierbei kann beispielsweise die gemäß der gerätespezifischen Kennung modifizierte Datensequenz 103 auf eine Datensequenz zurückgeführt werden aus welcher die gerätespezifische Kennung entfernt wurde. Somit kann diese Datensequenz zur Überprüfung einer korrekten Adressierung in dem Ziel-Automatisierungsgerät 5-1, 5-2 genutzt werden. Die Vorrichtung 3 sendet daraufhin ein Datentelegramm 110 an das Ziel-Automatisierungsgerät 5-1, 5-2, welches neben den Nutzdaten 101 und dem Status/Kontrollbyte 102 auch die von der gerätespezifischen Kennung befreite Datensequenz 105 enthält. Wurde dabei gemäß der Adressierung eine korrekte gerätespezifische Kennung verwendet, so kann das Automatisierungsgerät 5-1, 5-2 auf Grundlage dieser Datensequenz 105 eine erfolgreiche Überprüfung durchführen. Schlägt diese Überprüfung der Datensequenz 105 fehl, so kann dies auch auf einen Adressierungsfehler zurückzuführen sein. In diesem Fall kann das Automatisierungsgerät 5-1, 5-2 dieses Datentelegramm 110 verwerfen.

Empfängt die Vorrichtung 3 zur Kopplung eines Gerätenetzwerkes mit einem Kommunikationsnetzwerk von einem Automatisierungsgerät 5-1, 5-2 ein Datentelegramm, bei welchem keine gerätespezifische Kennung implementiert ist, so kann diese gerätespezifische Kennung durch die Vorrichtung im 3 ergänzt werden, bevor ein solches Datentelegramm zu der Steuervorrichtung 1 gesendet wird. Wie im unteren Teil der Figur 4 dargestellt, kann ein solches Datentelegramm 200 beispielsweise neben den Nutzdaten 201 und einem Status/Kontrollbyte 202 eine zusätzliche Datensequenz 205 umfassen. Die Verarbeitungseinrichtung 33 der Vorrichtung 3 kann daraufhin für das Automatisierungsgerät 5-1, 5-2, welches ein solches Datentelegramm gesendet hat eine gerätespezifische Kennung ermitteln und das Datentelegramm 200 entsprechend modifizieren. Hierzu kann zunächst beispielsweise die Datensequenz 205 gemäß der gerätespezifischen Kennung modifiziert werden. Zusätzlich kann eine Prüfsumme bzw. ein Hashwert 204 berechnet werden. Hieraus kann die Verarbeitungsvorrichtung 33 ein Datentelegramm 210 generieren, welches neben den Nutzdaten 201, dem Status/Kontrollbyte 202 in einem weiteren Segment 203 die modifizierte Datensequenz 205 sowie und in noch einem weiteren Segment 205 die Prüfsumme bzw. den Hashwert umfasst. Dieses Datentelegramm 210 kann über das Kommunikationsnetzwerk 2 an die Steuervorrichtung 1 gesendet werden.

Somit kann durch das Modifizieren eines Datenelements, beispielsweise der Datensequenz 205 mittels der gerätespezifischen Kennung das jeweilige Datentelegramm signiert werden. Ebenso kann unter Verwendung dieser gerätespezifischen Kennung eine solche Signatur überprüft werden. In einer Implementierung kann beispielsweise auf das zu signieren Datenelement eine Entweder-oder-Operation (XOR) mit der gerätespezifischen Kennung angewendet werden. Durch das nochmalige Anwenden einer solchen XOR-Operation mit derselben spezifischen Kennung können daraufhin die ursprünglichen Ausgangsdaten gewonnen werden.

Die gerätespezifischen Kennungen für Automatisierungsgerät 5-1, 5-2 können beispielsweise in einem Speicher 34 der Vorrichtung 3 abgespeichert werden. Beispielsweise können die gerätespezifischen Kennungen bei einer Installation bzw. Konfiguration des Automatisierungssystems durch einen Benutzer in den Speicher 34 eingeschrieben werden. Darüber hinaus sind jedoch auch beliebige geeignete automatische oder teilautomatische Verfahren zur Speicherung der gerätespezifischen Kennung in dem Speicher 34 der Vorrichtung 3 möglich. Zum Beispiel kann die Steuervorrichtung 1 die gerätespezifischen Kennungen mittels entsprechender Datenpakete über das Kommunikationsnetzwerk 2 an die Vorrichtung 3 übertragen.

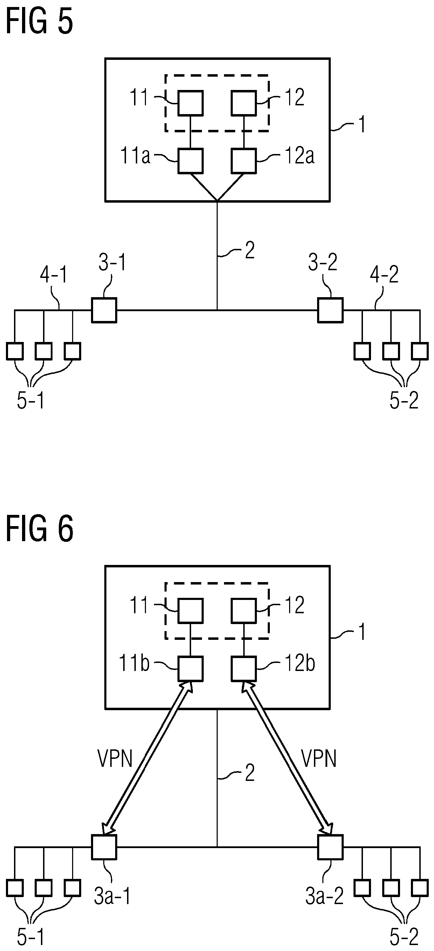

Figur 5 zeigt eine schematische Darstellung eines Prinzipschaubilds eines Automatisierungssystems gemäß einer weiteren Ausführungsform. Die Ausführungsform gemäß Figur 5 unterscheidet sich von der zuvor beschriebenen Ausführungsform eines Automatisierungssystems insbesondere dadurch, dass die Modifikation bzw. Signatur der Datentelegramme gemäß der gerätespezifischen Kennung nicht innerhalb der Steuerungsprozesse 11, 12 in der Steuervorrichtung 1 erfolgen. Vielmehr sind in der Steuervorrichtung 1 separate, ausgelagerte Prozesse 11a und 12a vorgesehen, welche analog zu den Operationen der Vorrichtung 3 die Datentelegramme gemäß den gerätespezifischen Kennungen signieren bzw. die Signaturen gemäß den gerätespezifischen Kennungen überprüfen. Dies kann beispielsweise mittels sogenannter Sidecar-Container implementiert werden.

Figur 6 schließlich zeigt eine schematische Darstellung eines Prinzipschaubilds eines Automatisierungssystems gemäß noch einer weiteren Ausführungsform. Diese Ausführungsform unterscheidet sich von den zuvor beschriebenen Ausführungsform insbesondere dadurch, dass die Datentelegramme innerhalb der Steuerungsprozesse 11, 12 gemäß den gerätespezifischen Kennungen generiert werden. In separaten, ausgelagerten Prozessmodulen 11b, 12b werden daraufhin die Datentelegramme in gleicher Weise bearbeitet, wie dies zuvor in Zusammenhang mit den Operationen der Vorrichtung 3 zur Kopplung eines Gerätenetzwerkes mit einem Kommunikationsnetzwerk beschrieben worden ist. Die so modifizierten Datentelegramme werden daraufhin über geschützte, vorzugsweise verschlüsselte Verbindungen innerhalb des Kommunikationsnetzwerk 2 zu Vorrichtungen 3a-1, 3a-2 übertragen. Analog können von diesen Vorrichtungen über die geschützten Verbindungen innerhalb des Kommunikationsnetzwerk 2 Datentelegramme von den Automatisierungsgeräten 5-1, 5-2 empfangen werden.

Hierdurch ist es einerseits möglich, die Steuerungsprozesse 11, 12 innerhalb der Steuervorrichtung 1 auf Basis von Datentelegrammen gemäß den gerätespezifischen Kennungen zu betreiben, während andererseits außerhalb der Steuervorrichtung 1 keinerlei Operationen auf Basis der gerätespezifischen Kennungen ausgeführt werden müssen. Hierbei wird die sichere Zuordnung der Adressierung durch die speziellen geschützten, vorzugsweise verschlüsselten Verbindungen gewährleistet. Da die Konvertierung der Datentelegramme zwischen Datentelegrammen mit signieren auf Basis einer gerätespezifischen Kennung und Datentelegramme ohne eine solche Signatur hierbei bereits in der Steuervorrichtung 1 durchgeführt wird, muss in den Vorrichtungen 3 zwischen den Gerätenetzwerken und dem Kommunikationsnetzwerk lediglich die Funkqualität für eine geschützte Daten Verbindung zu der Steuervorrichtung 1 implementiert werden. Dies kann beispielsweise auf Grundlage eines virtuellen privaten Netzwerks (VPN) oder ähnlichem realisiert werden.

Zusammenfassend betrifft die vorliegende Erfindung ein System zur Verifikation der Adressierung von Komponenten in einem Automatisierungssystem mit einer Hyper-konvergenten Infrastruktur. Insbesondere wird ein Gateway vorgeschlagen, welches Datentelegramme um eine gerätespezifische Signatur erweitern kann, falls eine solche Signatur durch die Automatisierungsgerät der des Automatisierungssystem nicht selbst umgesetzt werden kann.

## Patentansprüche

1. Vorrichtung (3, 3-1, 3-2) zur Kopplung eines Gerätenetzwerks (4-1, 4-2) mit mindestens einem Automatisierungsgerät (5-1, 5-2) und eines Kommunikationsnetzwerks (2) mit einer Steuervorrichtung (1) für das mindestens eine Automatisierungsgerät (5-1, 5-2), mit:
einer ersten Schnittstelle (31), die dazu ausgelegt ist, mit dem Gerätenetzwerk (4-1, 4-2) gekoppelt zu werden,
einer zweiten Schnittstelle (32), die dazu ausgelegt ist, mit dem Kommunikationsnetzwerk (2) gekoppelt zu werden,
einer Verarbeitungseinrichtung (3), die dazu ausgelegt ist, ein Datentelegramm von einem Automatisierungsgerät (5-1, 5-2) in dem Gerätenetzwerk (4-1, 4-2) mit einer gerätespezifischen Kennung zu signieren und das signierte Datentelegramm über das das Kommunikationsnetzwerk (2) an die Steuervorrichtung (1) zu senden, und ein signiertes Datentelegramm von der Steuervorrichtung (1) unter Verwendung einer gerätespezifischen Kennung zu überprüfen, die Signatur des signierten Datentelegramms zu entfernen und das Datentelegramm ohne die Signatur in ein Automatisierungsgerät (5-1, 5-2) in dem Gerätenetzwerk (4-1, 4-2) zu senden,
wobei die gerätespezifische Kennung eine vorbestimmte Kennung eines Quellgeräts (5-1, 5-2) oder Zielgeräts (5-1, 5-2) in dem Gerätenetzwerk (4-1, 4-2) umfasst.

2. Vorrichtung (3, 3-1, 3-2) nach Anspruch 1, mit einer Speichereinrichtung (34), die dazu ausgelegt ist, vorbestimmten gerätespezifischen Kennungen für Automatisierungsgeräte (5-1, 5-2) in dem Gerätenetzwerk (4-1, 4-2) zu speichern und bereitzustellen.

3. Vorrichtung (3, 3-1, 3-2) nach Anspruch 1 oder 2, wobei das Signieren eines Datentelegramms von dem Gerätenetzwerk (4-1, 4-2) und das Entfernen der Signatur eines Datentelegramms aus dem Kommunikationsnetzwerk (2) eine XOR-Operation zwischen einem vorbestimmten Datenfeld und der gerätespezifischen Kennung umfasst.

4. Vorrichtung (3, 3-1, 3-2) nach einem der Ansprüche 1 bis 3, wobei die Verarbeitungseinrichtung (33) dazu ausgelegt ist, bereits signierte Datentelegramme aus dem Gerätenetzwerk (4-1, 4-2) unverändert über das Kommunikationsnetzwerk (2) zu der Steuervorrichtung (1) weiterzuleiten und signierte Datentelegramme unverändert an ein Automatisierungsgerät (5-1, 5-2) in dem Gerätenetzwerk (4-1, 4-2) weiterzuleiten, falls das entsprechenden Automatisierungsgerät (5-1, 5-2) dazu ausgelegt ist, signierte Datentelegramme zu verarbeiten.

5. Vorrichtung (3, 3-1, 3-2) nach einem der Ansprüche 1 bis 4, wobei die Verarbeitungseinrichtung (33) dazu ausgelegt ist, ein signiertes Datentelegramm zu verschlüsseln, bevor es über das Kommunikationsnetzwerk (2) zu der Steuervorrichtung (1) gesendet wird, und verschlüsselten Datentelegramm von der Steuervorrichtung (1) zu entschlüsseln.

6. Vorrichtung (3, 3-1, 3-2) nach einem der Ansprüche 1 bis 5, wobei die Datentelegramme Telegramme eines Kommunikationsprotokolls nach IEC 61784-3 umfassen.

7. Automatisierungssystem, mit:
mehreren Gruppen von Automatisierungsgeräten (5-1, 5-2), wobei die Automatisierungsgeräte (5-1, 5-2) einer Gruppe von Automatisierungsgeräten (5-1, 5-2) jeweils mittels eines separaten Gerätenetzwerks (4-1, 4-2) miteinander verbunden sind;
einer Steuervorrichtung (1), die dazu ausgelegt ist, mehrere Steuerungsprozesse für Automatisierungsgeräte (5-1, 5-2) auf einer gemeinsamen Hardware auszuführen, wobei jeweils ein Steuerungsprozess für die Automatisierungsgeräte (5-1, 5-2) einer Gruppe von Automatisierungsgeräten (5-1, 5-2) vorgesehen ist;
mehrere Vorrichtungen (3-1, 3-2) zur Kopplung eines Gerätenetzwerks mit einem Kommunikationsnetzwerk nach einem der Ansprüche 1 bis 6,
wobei jeweils eine Vorrichtung (3-1, 3-2) zur Kopplung eines Gerätenetzwerks mit einem Kommunikationsnetzwerk das Gerätenetzwerk (4-1, 4-2) einer Gruppe von Automatisierungsgeräten (5-1, 5-2) mit einem Kommunikationsnetzwerk (2) koppelt, und
die Steuervorrichtung (1) mit den mehreren Vorrichtungen zur Kopplung eines Gerätenetzwerks mit einem Kommunikationsnetzwerk über ein gemeinsames Kommunikationsnetzwerk (2) verbunden sind.

8. Automatisierungssystem, mit:
mehreren Gruppen von Automatisierungsgeräten (5-1, 5-2), wobei die Automatisierungsgeräte (5-1, 5-2) einer Gruppe von Automatisierungsgeräten (5-1, 5-2) jeweils mittels eines separaten Gerätenetzwerks (4-1, 4-2) miteinander verbunden sind;
einer Steuervorrichtung (1), die dazu ausgelegt ist, mehrere Steuerungsprozesse für Automatisierungsgeräte (5-1, 5-2) auf einer gemeinsamen Hardware auszuführen, wobei jeweils ein Steuerungsprozess für die Automatisierungsgeräte einer Gruppe von Automatisierungsgeräten (5-1, 5-2) vorgesehen ist,
und wobei in der Steuervorrichtung (1) ferner für jeden Steuerungsprozess eine Verarbeitungsinstanz vorgesehen ist, die jeweils dazu ausgelegt ist, ein Datentelegramm von einem Automatisierungsgerät (5-1, 5-2) mit einer gerätespezifischen Kennung zu signieren und das signierte Datentelegramm an den korrespondierenden Steuerungsprozess weiterzuleiten, und ein signiertes Datentelegramm von einem Steuerungsprozess unter Verwendung einer gerätespezifischen Kennung zu überprüfen, die Signatur des signierten Datentelegramms zu entfernen und das Datentelegramm ohne die Signatur auszugeben,
mehrere Vorrichtungen (3-1, 3-2) zur Kopplung eines Gerätenetzwerks mit einer Steuervorrichtung, wobei jede der Vorrichtungen zur Kopplung eines Gerätenetzwerks mit einer Steuervorrichtung (3-1, 3-2) dazu ausgelegt ist, eine gesicherte Verbindung in einem Kommunikationsnetzwerk (2) mit einer Verarbeitungsinstanz der Steuervorrichtung (1) aufzubauen und Datentelegramme zwischen dem jeweiligen Gerätenetzwerk und der korrespondierenden Verarbeitungsinstanz der Steuervorrichtung (1) über die gesicherte Verbindung auszutauschen.

9. Verfahren zur Kopplung eines Gerätenetzwerks (4-1, 4-2) mit mindestens einem Automatisierungsgerät (5-1, 5-2) und eines Kommunikationsnetzwerks (2) mit einer Steuervorrichtung (1) für das mindestens eine Automatisierungsgerät (5-1, 5-2),
wobei ein Datentelegramm von dem Gerätenetzwerk (4-1, 4-2) mit einer gerätespezifischen Kennung zu signiert wird und das signierte Datentelegramm über das Kommunikationsnetzwerk (2) zu der Steuervorrichtung (1) gesendet wird, und
wobei ein signiertes Datentelegramm, das von der Steuervorrichtung (1) über das Kommunikationsnetzwerk (2) empfangen worden ist, unter Verwendung einer gerätespezifischen Kennung überprüft wird, und die Signatur des signierten Datentelegrams entfernt wird und das Datentelegramm ohne die Signatur an ein Automatisierungsgerät (5-1, 5-2) in dem Gerätenetzwerk (4-1, 4-2) gesendet wird,
wobei die gerätespezifische Kennung eine vorbestimmte Kennung des eines Quellgeräts (5-1, 5-2) oder Zielgeräts (5-1, 5-2) in dem Gerätenetzwerk (4-1, 4-2) umfasst.

10. Verfahren nach Anspruch 9, wobei ein Datentelegramm nur dann an das Automatisierungsgerät (5-1, 5-2) in dem Gerätenetzwerk (4-1, 4-2) gesendet wird, falls die Überprüfung der Signatur erfolgreich war.

## Claims

1. Apparatus (3, 3-1, 3-2) for coupling a device network (4-1, 4-2) to at least one automation device (5-1, 5-2) and a communication network (2) to a control apparatus (1) for the at least one automation device (5-1, 5-2), comprising:
a first interface (31) designed to be coupled to the device network (4-1, 4-2),
a second interface (32) designed to be coupled to the communication network (2),
a processing facility (3) which is designed to sign a data telegram from an automation device (5-1, 5-2) in the device network (4-1, 4-2) with a device-specific identifier and to send the signed data telegram to the control apparatus (1) via the communication network (2), and to verify a signed data telegram from the control apparatus (1) using a device-specific identifier, to remove the signature of the signed data telegram, and to send the data telegram without the signature to an automation device (5-1, 5-2) in the device network (4-1, 4-2),
wherein the device-specific identifier comprises a predetermined identifier of a source device (5-1, 5-2) or destination device (5-1, 5-2) in the device network (4-1, 4-2).

2. Apparatus (3, 3-1, 3-2) according to claim 1, comprising a memory facility (34) designed to store and provide predetermined device-specific identifiers for automation devices (5-1, 5-2) in the device network (4-1, 4-2).

3. Apparatus (3, 3-1, 3-2) according to claim 1 or 2, wherein the signing of a data telegram from the device network (4-1, 4-2) and the removing of the signature of a data telegram from the communication network (2) involves an XOR operation between a predetermined data field and the device specific identifier.

4. Apparatus (3, 3-1, 3-2) according to one of claims 1 to 3, wherein the processing facility (33) is designed to forward already signed data telegrams unchanged from the device network (4-1, 4-2) via the communication network (2) to the control apparatus (1) and to forward signed data telegrams unchanged to an automation device (5-1, 5-2) in the device network (4-1, 4-2) if the corresponding automation device (5-1, 5-2) is designed to process signed data telegrams.

5. Apparatus (3, 3-1, 3-2) according to one of claims 1 to 4, wherein the processing facility (33) is designed to encrypt a signed data message before it is sent to the control apparatus (1) via the communication network (2) and to decrypt encrypted data message from the control apparatus (1).

6. Apparatus (3, 3-1, 3-2) according to one of claims 1 to 5, wherein the data telegrams comprise telegrams of a communication protocol per IEC 61784-3.

7. Automation system, comprising:
a plurality of groups of automation devices (5-1, 5-2), wherein the automation devices (5-1, 5-2) of a group of automation devices (5-1, 5-2) are each interconnected by means of a separate device network (4-1, 4-2);
a control apparatus (1) designed to execute a plurality of control processes for automation devices (5-1, 5-2) on a common hardware, wherein a control process is provided for each of the automation devices (5-1, 5-2) of a group of automation devices (5-1, 5-2);
a plurality of apparatuses (3-1, 3-2) for coupling a device network to a communication network according to one of claims 1 to 6,
wherein an apparatus (3-1, 3-2) for coupling a device network to a communication network couples the device network (4-1, 4-2) of a group of automation devices (5-1, 5-2) to a communication network (2) in each case, and
the control apparatus (1) is connected to the plurality of apparatuses for coupling a device network to a communication network via a common communication network (2).

8. Automation system, comprising:
a plurality of groups of automation devices (5-1, 5-2), wherein the automation devices (5-1, 5-2) of a group of automation devices (5-1, 5-2) are each interconnected by means of a separate device network (4-1, 4-2);
a control apparatus (1) designed to execute a plurality of control processes for automation devices (5-1, 5-2) on a common hardware, wherein a control process is provided for each of the automation devices of a group of automation devices (5-1, 5-2),
and wherein a processing instance is additionally provided in the control apparatus (1) for each control process, each processing instance being designed to sign a data telegram from an automation device (5-1, 5-2) with a device-specific identifier and to forward the signed data telegram to the corresponding control process, and to check a signed data telegram from a control process using a device-specific identifier, to remove the signature of the signed data telegram and to output the data telegram without the signature,
a plurality of apparatuses (3-1, 3-2) for coupling a device network to a control apparatus, wherein each of the apparatuses for coupling a device network to a control apparatus (3-1, 3-2) is designed to establish a secure connection in a communication network (2) with a processing instance of the control apparatus (1) and to exchange data telegrams between the respective device network and the corresponding processing instance of the control apparatus (1) via the secure connection.

9. Method for coupling a device network (4-1, 4-2) to at least one automation device (5-1, 5-2) and for coupling a communication network (2) to a control apparatus (1) for the at least one automation device (5-1, 5-2),
wherein a data telegram from the device network (4-1, 4-2) is signed with a device-specific identifier and the signed data telegram is sent to the control apparatus (1) via the communication network (2), and
wherein a signed data telegram received by the control apparatus (1) via the communication network (2) is verified using a device-specific identifier, and the signature of the signed data telegram is removed and the data telegram is sent without the signature to an automation device (5-1, 5-2) in the device network (4-1, 4-2),
wherein the device-specific identifier comprises a predetermined identifier of the source device (5-1, 5-2) or the destination device (5-1, 5-2) in the device network (4-1, 4-2).

10. Method according to claim 9, wherein a data telegram is sent to the automation device (5-1, 5-2) in the device network (4-1, 4-2) only if signature verification was successful.

## Revendications

1. Installation (3, 3-1, 3-2) de connexion d'un réseau (4-1, 4-2) d'appareils à au moins un appareil (5-1, 5-2) d'automatisation et d'un réseau (2) de communication à une installation (1) de commande du au moins un appareil (5-1, 5-2) d'automatisation, comprenant :
une première interface (31), qui est conçue pour être connectée au réseau (4-1, 4-2) d'appareils,
une deuxième interface (32), qui est conçue pour être connectée au réseau (2) de communication,
un dispositif (3) de traitement, qui est conçu pour signer, d'une identification spécifique à un appareil, un télégramme de données d'un appareil (5-1, 5-2) d'automatisation dans le réseau (4-1, 4-2) d'appareils et pour envoyer le télégramme de données signé en passant par le réseau (2) de communication à l'installation (1) de commande et pour contrôler, en utilisant une identification spécifique à un appareil, par l'installation (1) de commande un télégramme de données signé, pour retirer la signature du télégramme de données signé et pour envoyer le télégramme de données sans la signature dans un appareil (5-1, 5-2) d'automatisation dans le réseau (4-1, 4-2) d'appareils,
dans laquelle l'identification spécifique à un appareil comprend une identification déterminée à l'avance d'un appareil (5-1, 5-2) source ou d'un appareil (5-1, 5-2) cible dans le réseau (4-1, 4-2) d'appareils.

2. Installation (3, 3-1, 3-2) suivant la revendication 1, comprenant un dispositif (34) de mémoire, qui est conçu pour mettre en mémoire et à disposition des identifications spécifiques à un appareil déterminé à l'avance pour des appareils (5-1, 5-2) d'automatisation dans le réseau (4-1, 4-2) d'appareils.

3. Installation (3, 3-1, 3-2) suivant la revendication 1 ou 2, dans laquelle la signature d'un télégramme de données par le réseau (4-1, 4-2) d'appareils et le retrait de la signature d'un télégramme de données du réseau (2) de communication comprend une opération XOU entre un champ de données déterminé à l'avance et l'identification spécifique à un appareil.

4. Installation (3, 3-1, 3-2) suivant l'une des revendications 1 à 3, dans laquelle le dispositif (33) de traitement est conçu pour acheminer à l'installation (1) de commande, en passant par le réseau (2) de communication, sans changement, des télégrammes de données déjà signés provenant du réseau (4-1, 4-2) d'appareils, et pour acheminer dans le réseau (4-1, 4-2) d'appareils à un appareil (5-1, 5-2) d'automatisation sans changement, des télégrammes de données signés, si l'appareil (5-1, 5-2) d'automatisation correspondant est conçu pour traiter des télégrammes de données signés.

5. Installation (3, 3-1, 3-2) suivant l'une des revendications 1 à 4, dans laquelle le dispositif (33) de traitement est conçu, pour chiffrer un télégramme de données signé avant de l'envoyer, en passant par le réseau (2) de communication, à l'installation (1) de commande, et pour déchiffrer par l'installation (1) de commande un télégramme de données chiffré.

6. Installation (3, 3-1, 3-2) suivant l'une des revendications 1 à 5, dans laquelle les télégrammes de données comprennent des télégrammes d'un protocole de communication suivant IEC 61784-3.

7. Système d'automatisation, comprenant :
plusieurs groupes d'appareils (5-1, 5-2) d'automatisation, dans lequel les appareils (5-1, 5-2) d'automatisation d'un groupe d'appareils (5-1, 5-2) d'automatisation sont connectés respectivement entre eux au moyen d'un réseau (4-1, 4-2) d'appareils distincts ;
une installation (1) de commande, qui est conçue pour exécuter sur un matériel commun plusieurs processus de commande d'appareils (5-1, 5-2) d'automatisation, dans lequel il est prévu respectivement un processus de commande des appareils (5-1, 5-2) d'automatisation d'un groupe d'appareils (5-1, 5-2) d'automatisation ;
plusieurs installations (3-1, 3-2) de connexion d'un réseau d'appareils à un réseau de communication suivant l'une des revendications 1 à 6,
dans lequel respectivement une installation (3-1, 3-2) de connexion d'un réseau d'appareils à un réseau de communication connecte le réseau (4-1, 4-2) d'appareils d'un groupe d'appareils (5-1, 5-2) d'automatisation à un réseau (2) de communication, et
l'installation (1) de commande ayant les plusieurs installations de connexion d'un réseau d'appareils est connectée à un réseau de communication en passant par un réseau (2) de communication commun.

8. Système d'automatisation, comprenant :
plusieurs groupes d'appareils (5-1, 5-2) d'automatisation, dans lequel les appareils (5-1, 5-2) d'automatisation d'un groupe d'appareils (5-1, 5-2) d'automatisation sont connectés respectivement entre eux au moyen d'un réseau (4-1, 4-2) d'appareils distincts ;
une installation (1) de commande, qui est conçue pour exécuter sur un matériel commun plusieurs processus de commande d'appareils (5-1, 5-2) d'automatisation, dans lequel il est prévu respectivement un processus de commande des appareils d'automatisation d'un groupe d'appareils (5-1, 5-2) d'automatisation,
et dans lequel il est prévu dans l'installation (1) de commande en outre pour chaque processus de commande une instance de traitement, qui est conçue respectivement pour signer, par une identification spécifique à un appareil, par un appareil (5-1, 5-2) d'automatisation, un télégramme de données et acheminer le télégramme de données signé au processus de commande correspondant et pour contrôler, en utilisant une identification spécifique à un appareil, par un processus de commande, un télégramme de données signé et émettre le télégramme de données sans la signature,
plusieurs installations (3-1, 3-2) de connexion d'un réseau d'appareils à une installation de commande, dans lequel chacune des installations de connexion d'un réseau d'appareils à une installation (3-1, 3-2) de commande est conçue pour établir une communication sécurisée dans un réseau (2) de communication avec une instance de traitement de l'installation (1) de commande et pour échanger, en passant par la communication sécurisée, de télégrammes de données entre le réseau d'appareils respectif et l'instance de traitement correspondante de l'installation (1) de commande.

9. Procédé de connexion d'un réseau (4-1, 4-2) d'appareils à au moins un appareil (5-1, 5-2) d'automatisation et d'un réseau (2) de communication à une installation (1) de commande du au moins un appareil (5-1, 5-2) d'automatisation,
dans lequel un télégramme de données est signé avec une identification spécifique à un appareil par le réseau (4-1, 4-2) d'appareils et le télégramme de données signé est envoyé à l'installation (1) de commande en passant par le réseau (2) de communication, et
dans lequel un télégramme de données signé, qui a été reçu par l'installation (1) de commande, en passant par le réseau (2) de communication, est contrôlé en utilisant une identification spécifique à un appareil, et la signature du télégramme de données signée est retirée et le télégramme de données est envoyé sans la signature à un appareil (5-1, 5-2) d'automatisation dans le réseau (4-1, 4-2) d'appareils,
dans lequel l'identification spécifique à un appareil comprend une identification déterminée à l'avance d'un appareil (5-1, 5-2) source ou d'un appareil (5-1, 5-2) cible dans le réseau (4-1, 4-2) d'appareils.

10. Procédé suivant la revendication 9, dans lequel on n'envoie un télégramme de données à l'appareil (5-1, 5-2) d'automatisation dans le réseau (4-1, 4-2) d'appareils, que si le contrôle de la signature a été couronné de succès.
